# EUROPÄISCHE PATENTANMELDUNG

(11) **EP 2 282 090 A2**
(43) Veröffentlichungstag der Anmeldung: **09.02.2011**
(21) Anmeldenummer: 10008045.6
(22) Anmeldetag: 02.08.2010
(51) Int. Cl.: F16K 31/06

(54) **Ventil, insbesondere Druckregelventil**

(30) Priorität: 03.08.2009 DE 102009035902
(71) Anmelder: Firma SVM Schultz Verwaltungs-GmbH & Co. KG, 87700 Memmingen (DE)
(72) Erfinder: Scherer, Georg, 87757 Kirchheim (DE); Mang, Helmut, 87700 Memmingen (DE)
(74) Vertreter: Schulz, Manfred

(57) **Zusammenfassung**

Die Erfindung betrifft ein durch einen Elektromagneten betätigbares Ventil. Dabei wirkt der Anker des Elektromagneten auf ein Regelelement. Dieses wird dabei derart axial versetzt, dass sich die Spaltweite eines in einer Ventilbuchse vorgesehenen Spaltes (10) verändert. Das Regelelement besteht aus einem Regelstift (20) und einem hiervon getrennt hergestellten, auf dem Regelstift (20) befestigten Regelstück (21), wobei das Regelstück mit dem Spalt (10) zusammenwirkt.

## Beschreibung

Die Erfindung betrifft ein durch einen Elektromagneten betätigbares Ventil, insbesondere Druckregelventil, wobei der Anker des Elektromagneten auf ein Regelelement des Ventils wirkt und dieses derart, insbesondere axial versetzt, dass sich die Spaltweite eines in beziehungsweise an einem Ventilelement, wie zum Beispiel einer Ventilplatte oder einer Ventilbuchse vorgesehenen Spaltes verändert beziehungsweise der Spalt sich öffnet oder schließt.

Bei von Elektromagneten betätigten Druckregelventilen wird durch die Kraft des Elektromagneten der Spalt zwischen dem Regelelement und dem in der Ventilbuchse oder dem Ventilelement angeordneten Ventilsitz verändert und damit der Hydraulikdruck am Arbeitsanschluss gesteuert. Der Spalt ist begrenzt einerseits von dem Ventilsitz udn andererseits von der am Regelelement vorgesehenen Begrenzungsfläche. Da die Lage des Regelelements und daher der Begrenzungsfläche veränderlich ist, verändert sich auch der Abstand (Spaltweite) der den Spalt begrenzenden Flächen. Das Regelelement besteht dabei aus einem aus Metall gefertigten, üblicherweise gedrehten Regelstift, an dem einstückig eine entsprechede Abdichtfläche angearbeitet ist, die mit dem Ventilsitz zusammenwirkt. Der Elektromagnet besteht aus einer mit elektrischen Strom beaufschlagbaren Spule, welche einen Ankerraum umgibt. In dem Ankerraum ist ein auf das Regelelement wirkender Anker axial beweglich gelagert, dessen axiale Stellung durch die Bestromung der Spule veränderbar ist. Aufgrund dieser axialen Lageveränderung verändert sich die Spaltweite am Regelelement, natürlich ist dadurch auch ein Öffnen oder Schließen des Ventiles ebenfalls möglich.

Die drehtechnische und daher zerspanende Herstellung des Regelelementes ist aufwendig.

Es ist daher das Ziel der Erfindung ein Ventil vorzuschlagen, welches günstiger herzustellen ist.

Gelöst wird diese erfindungsgemäße Aufgabe durch ein Ventil, wie eingangs beschrieben, wobei vorgeschlagen wird, dass das Regelelement aus einem Regelstift und einem hiervon getrennt hergestellten, auf dem Regelstift befestigten Regelstück gebildet ist und das Regelstück mit dem Spalt zusammenwirkt.

Die Erfindung schlägt hier bewußt einen mehrteiligen Aufbau des Regelelementes vor, da der Bearbeitungsaufwand insbesondere für das Regelstück dadurch deutlich reduziert werden kann. Es ist nun möglich das Regelstück auf den jeweiligen Anwendungsfall zum Beispiel abhängig von Betriebsdruck, Medium, welches zu steuern ist usw., zu optimieren und für die Bewegung des Regelstückes immer den gleichen Regelstift zu verwenden. Es bleibt daher bei sehr hohen Losgrößen für standardisierte Regelstifte, die mit entsprechend optimierten Regelstücken verbunden werden. Der Spalt wird einerseits vom Ventilsitz und andererseits von der an dem Regelstück angeordneten Begrenzungsfläche begrenzt. Die Spaltweite definiert sich z. B. über den kürzesten Abstand zwischen dem Ventilsitz und der Begrenzungsfläche. Die Abdichtfläche ist dabei Teil der Begrenzungsfläche.

Regelstück und Regelstift werden dabei in geeigneter Weise miteinander verbunden, für ihre Materialpaarung bieten sich hier die verschiedensten Varianten an. Es können hier zum Beispiel Klebungen vorgesehen sein, es ist aber auch möglich, eine Verstemmung, ein Verschweißen oder eine sonstige formschlüssige oder kraftschlüssige Verbindungstechnik erfindungsgemäß einzusetzen. Da bewußt auch eine Materialungleichheit zwischen dem Regelstift und dem Regelstift von der Erfindung umfasst ist, geht die kostengünstigere Herstellung eines erfindungsgemäßen Ventiles einher mit einer höheren Ventildynamik, wenn nämlich für das Regelstück eine leichtere Bauform, z. B. mit einem Material geringer Dichte realisiert wird. Aufgrund des sich hier anbietenden Baukastenprinzips kann ein erfindungsgemäßes Druckregelventil, bei Verwendung des gleichen Regelstiftes, auch bezüglich seiner Ventildynamik durch Variation des jeweiligen Regelstückes auf die jeweilige Anwendung optimiert werden.

Dabei ist die Material- beziehungsweise Massenersparnis nicht nur aufgrund einer entsprechend unterschiedlichen Materialwahl von Regelstift und Regelstück begründet, grundsätzlich umfasst die Erfindung natürlich auch Anwendungen, bei welchen Regelstift und Regelstück materialgleich hergestellt sind, wobei aber zum Beispiel das Regelstück aus einem flächigen Material in einem Stanzbiege- oder Stanzsenkvorgang gewonnen worden ist, welcher in einer Massenfertigung äußerst kostengünstig realisierbar ist und dann aufgrund der geringen Wandstärke des Regelstückes zu einer entsprechenden Massenreduktion beiträgt, die Materialgleichheit lässt aber zum Beispiel ein Verschweißen des Regelstückes auf dem Regelstift zu!

In der Anmeldung wird der Begriff Ventilplatte oder Ventilbuchse als beispielhafte Ausgestaltung des Ventilelementes beschrieben. Soweit ein Merkmal nur für das Merkmal der Ventilbuchse oder der Ventilplatte verwendet worden ist, beziehungsweise hier definiert ist, so beschränkt dies die Erfindung in diesem Bereich nicht. Anstelle der Bezeichnung Ventilbuchse oder Ventilplatte ist allgemein auch der Begriff Ventilelement zu setzen.

Die Erfindung ist in gleicher Weise auch bei Ventilen, insbesondere Druckregelventilen anwendbar, bei welchen der Anker direkt oder indirekt auf das Regelelement wirkt. Bei einer indirekten Anordnung ist zum Beispiel zwischen dem Anker und dem Regelelement ein Zwischenstück vorgesehen, was gegebenenfalls auch fliegend, wie auch das Regelelement, gelagert ist. Eine Rückstellung oder Anlage wird zum Beispiel durch entsprechende Rückstellfeder oder ähnlichem erreicht. Natürlich ist es erfindungsgemäß auch vorgesehen, dass das Regelelement, insbesondere der Regelstift, fest (und somit zum Beispiel direkt) mit dem Anker verbunden ist. Beide vorgenannten Varianten gehören zur Erfindung.

Bezüglich der Ausgestaltung des Regelstückes ist die Erfindung ebenfalls sehr variabel einsetzbar. Es ist möglich, dass das Regelstück scheiben-, teller-, kegel-, trichter- oder konusartig ausgebildet ist, wobei sich die Realisierungsmöglichkeiten des Regelstückes auf diese Varianten nicht beschränkt. So ist es zum Beispiel möglich, dass auch ringscheibenartige Regelstücke und so weiter verwendet werden. Natürlich ist die entsprechende Wahl des Regelstückes auf den Anwendungsfall und auf die Ausgestaltung der Ventilbuchse, insbesondere des Ventilsitzes abzustimmen, weswegen sich die unterschiedlichen Typen von Regelstücken auf die jeweiligen Anwendungsfälle beziehen.

Es ist gefunden worden, dass trichter-, kegel- oder konusartige Regelstücke, gerade bei schnell schaltenden Ventilen beziehungsweise schnell steuernden Druckregelventilen Vorteile aufweisen, die sie neben der durch die Massenreduzierung begründete höhere Ventildynamik auch eine höhere Stabilität gegen Druckschwingungen, aufgrund der kegel-, konus- oder trichterartigen Ausgestaltung aufweisen. Daher besitzt dann das Regelstück rückseitig eine zugängliche Kammer, wie diese auch in den Zeichnungen (siehe Bezugszeichen 22) gezeigt ist.

Die konusartige Ausgestaltung weist des Weiteren eine strömungsgünstige Formgebung auf, die das zu steuernde Medium in geeigneter Weise, der Konusmantelfläche folgend, ablenkt. Durch eine solche Formgebung wird auch bei hohen Drücken eine möglichst laminare Strömung beibehalten und Strömungsverluste entsprechend vermieden.

In einer bevorzugten Ausgestaltung der Erfindung ist das Regelstück dünnwandig ausgebildet. Die Stärke der das Regelstück begrenzenden Wand ist dabei deutlich geringer wie der Durchmesser des Regelstiftes beziehungsweise dessen Radius. Neben einer relativen Definition des Begriffes "dünnwandig" bezogen auf andere Dimensionen des erfindungsgemäßen Ventils kann die Dünnwandigkeit aber auch beispielhaft (und daher nicht begrenzend) mit einer Wandstärke von weniger als 2 mm, insbesondere weniger als 1 mm, bevorzugt weniger als 5/10 mm oder 8/10 mm beschrieben werden. Die richtige Wandstärke ergibt sich insbesondere aus dem Anwendungsbereich der Erfindung. Es ist klar, dass eine entsprechend geringe Materialdicke auch zu einer geringeren Masse und daher zu einer entsprechenden Ventildynamik beiträgt. Dabei ist zu beachten, dass die dünnwandige Ausgestaltung des Regelstückes sowohl bei Scheiben, Ringscheibenteller oder auch kegel- oder konusartig ausgebildeten Regelstücken einsetzbar ist. Diese erfindungsgemäße Variante ist dabei auch nicht nur auf die spezielle Materialwahl des Regelstückes beschränkt, das Regelstück ist aus Metall, zum Beispiel Leichtmetall, Aluminium oder auch nichtmagnetisierbaren oder unmagnetisierbaren Metallen beziehungsweise Stählen realisierbar.

Neben einer dünnwandigen Ausgestaltung des Regelstückes umfasst die Erfindung aber auch Varianten, bei welchen ein kegel- oder konusartiges Regelstück, zum Beispiel aus Vollmaterial, gebildet ist.

In einer bevorzugten Variante ist das Regelstück durch eine Kammer gekennzeichnet beziehungsweise die verhältnismäßig dünnwandige Begrenzungswand des Regelstückes umschließt eine Kammer, die rückseitig, der Konusspitze abgeneigt, zugänglich ist. Dabei ist üblicherweise das Regelstück mit seiner Konus- oder Kegelspitze mit dem Regelstift verbunden, derart, dass der Regelstift das Regelstück durchdringt und eigentlich die Ausgestaltung des Regelstückes in diesem Bereich kegelstumpfartig ist, was aber im Sinne der Erfindung mit kegel-, trichter- oder konusartig als umschrieben anzusehen ist. Aufgrund der kegelbeziehungsweise konusartigen Ausgestaltung verläuft die (äußere) Begrenzungswand des Regelstückes in einem spitzen Winkel zur Längsachse des Regelstiftes und es bildet sich so eine Kammer, die auch von dem Medium, welches zu steuern beziehungsweise zu regeln ist, befüllt ist.

In einer bevorzugten Ausgestaltung der Erfindung ist vorgesehen, dass in dem Verbindungsbereich von Regelstück und Regelstift auf dem Regelstift eine Umfangsnut oder Oberflächenausnehmung vorgesehen ist, die von dem Material des Regelstückes ausgefüllt ist. Durch das Einarbeiten einer entsprechenden Umfangsnut oder einer Oberflächenausnehmung in den Regelstift wird bei dem Verbindungsvorgang des Regelstückes auf dem Regelstift Material eingepresst und so ein formschlüssiger Verbund hergestellt. Dabei wird die Umfangsnut beziehungsweise die Oberflächenausnehmung nicht nur von einem metallischen Werkstoff des Regelstückes ausgefüllt, das Regelstück kann auch zum Beispiel aus Kunststoff bestehen und in einem Kunststoffspritzvorgang auf dem Regelstift angeordnet werden, wobei auch dann der (noch flüssige) Kunststoff die Umfangsnut oder eine entsprechende Oberflächenausnehmung ausfüllt.

Der grundsätzlich zweiteilige Aufbau des Regelelementes in Regelstift und Regelstück ermöglicht es, dass Regelstift und Regelstück auch aus unterschiedlichen Materialien bestehen, wenngleich die Variante, beide aus gleichen Materialien herzustellen, ebenso zur Erfindung zählt (z. B. Metall mit Metall oder Kunststoff mit Kunststoff). Regelstück beziehungsweise Regelstift können daher zum Beispiel aus Kunststoff, faserverstärktem Kunststoff, hochtemperaturfestem Kunststoff, hochfestem Kunststoff oder Metall, insbesondere un- oder geringmagnetischem Metall, wie entsprechende Stähle und so weiter, gebildet sein. Das Regelstück ist darüber hinaus alternativ zum Beispiel auch aus einer Metallfolie oder einem dünnwandigen Metallteil gebildet, es kann alternativ auch aus Keramik bestehen.

Gerade die Verwendung von neuartigen Hochtemperaturpolymeren mit einer Schmelztemperatur von über 380°C und einer Glasübergangstemperatur von mindestens 150°C erlauben es, kostengünstige hochtemperaturfeste und leichte Regelstücke zur Verfügung zu stellen, und somit auch noch extremere Anwendungsbereiche von erfindungsgemäßen Ventilen, insbesondere Druckregelventilen, zuverlässig zu beherrschen.

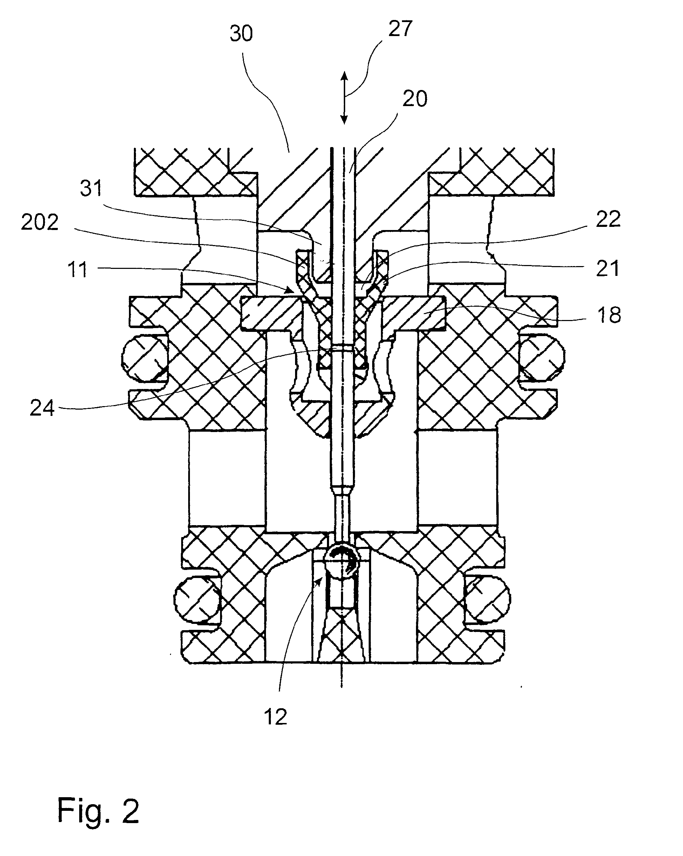

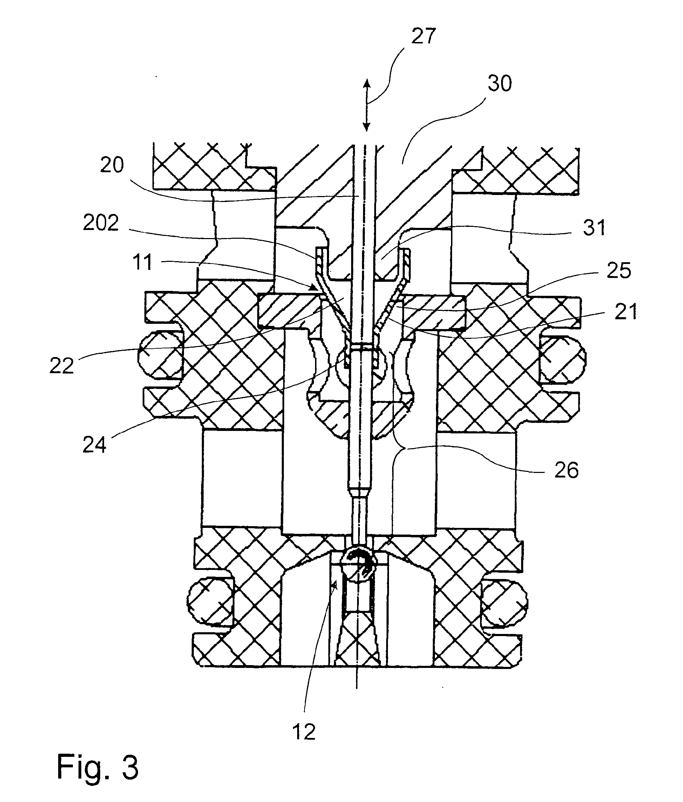

In einer bevorzugten Variante der Erfindung ist vorgesehen, dass der Regelstift in einem dem Kern geführt beziehungsweise gelagert ist und der Kern eine, dem Regelstück zugewandte Erhöhung aufweist, welche zumindest bei axialer Rückzugsbewegung des Regelstiftes zumindest teilweise in die Kammer eintaucht. In diesem Ausführungsbeispiel, wie es auch in der Zeichnung gezeigt ist (vergleiche Fig. 2 und 3) ist eine zusätzliche Verbesserung der Stabilität gegen Druckschwingungen beobachtet worden, da diese Magnetgeometrie (insbesondere wenn in jeder Betriebsstellung des Regelstückes in die Kammer einsteht) eine zusätzliche Dämpfungseigenschaft ergibt. Durch das Eintauchen der Erhöhung in die Kammer ergibt sich, dass das Volumen des Mediums innerhalb der Kammer (fast) vollständig von dem übrigen Volumenstrom abgetrennt wird und eine entsprechende Medienwelle hier nicht mehr oder nur sehr gedämpft eindringt. Somit ergibt es sich, dass das kegel-, trichter- oder konusartige, gegebenenfalls auch dünnwandig realisierte Regelstück "ausgesteift" wird. Somit wird eine hohe Stabilität gegenüber den Schwingungen des Mediums mit einer hohen Ventildynamik aufgrund des geringen Gewichtes des Regelstückes kombiniert.

Die Erfindung umfasst gleichwohl aber auch eine Lösung, bei welcher eine einstückige Variante des Regelelementes zum Beispiel aus Kunststoff oder Metall gefertigt wird. Als Material für die einstückige Ausführung des Regelelementes kommen dabei alle Materialien, die in dieser Anmeldung beschrieben sind, in Frage, also zum Beispiel Kunststoff, faserverstärkter Kunststoff, hochtemperaturfester Kunststoff, hochfester Kunststoff, Metall, insbesondere un- oder geringmagnetisches Metall, dünnwandiges Metall, Blech oder Folie beziehungsweise Keramik. Allgemein finden hierbei zum Beispiel entsprechende Stähle Verwendung, es ist aber auch möglich, zum Beispiel Kupfer, Aluminium oder andere Metalle, im Sinne der Erfindung einzusetzen. Die vorgenannte Metallwahl bezieht sich dabei auf alle Anwendungsfälle dieser Erfindung beziehungsweise dieser Anmeldung.

Es ist dabei auch möglich, ein einstückiges Regelelement aus metallischen Werkstoffen, zum Beispiel durch Drehen oder im geeigneten Verfahren wie zum Beispiel Ziehen und Falten herzustellen. Es ist auch grundsätzlich möglich, dass bei Materialgleichheit von Regelelement und Regelstück die beiden getrennt hergestellten Elemente hernach zum Beispiel verschweißt werden und so definitionsgemäß einstückig sind (aufgrund Materialgleichheit und der materialgleichen Verbindung), aber trotzdem der erfindungsgemäße Vorteil bei der Herstellung erhalten wurde.

In der Zeichnung ist die Erfindung insbesondere in einem Ausführungsbeispiel schematisch dargestellt. Es zeigen:

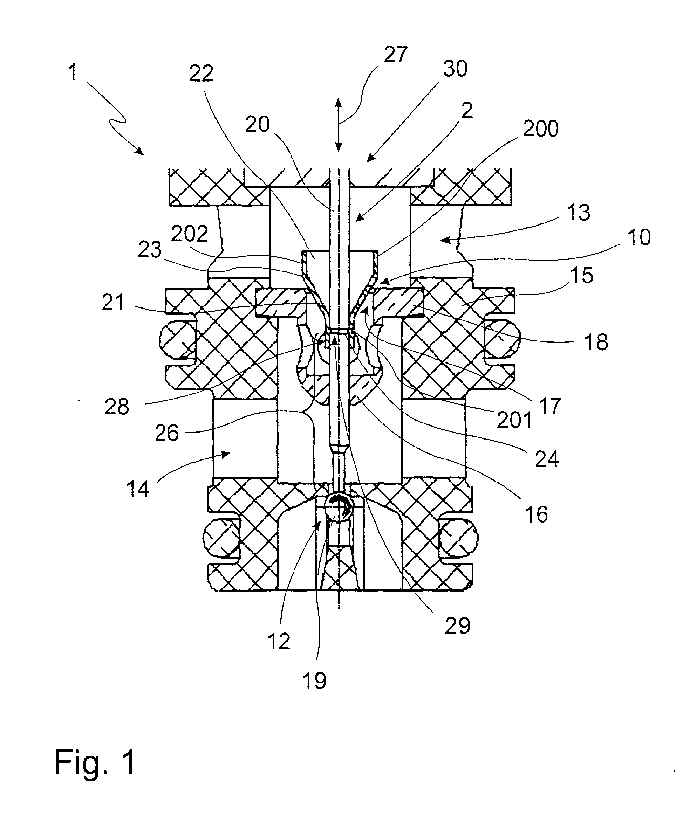

- Fig. 1, 2 und 3: je in einer Schnittdarstellung verschiedene Varianten des erfin- dungsgemäßen Ventils.

In den Figuren sind gleiche oder einander entsprechende Elemente jeweils mit den gleichen Bezugszeichen bezeichnet und werden daher, sofern nicht zweckmäßig, nicht erneut beschrieben.

Das erfindungsgemäße Ventil 1 ist in den Figuren in verschiedenen Varianten schematisch dargestellt. Das dargestellte Ventil 1 wird durch einen nicht dargestellten Elektromagneten, der aber ebenfalls zur Erfindung zählt, betätigt beziehungsweise gesteuert. Üblicherweise besteht ein Elektromagnet aus einem in einem Ankerraum beweglich gelagerten Anker, der auf den Regelstift 20 wirkt. Der Ankerraum ist umgeben von einer mit elektrischen Strom beaufschlagbaren Spule, die ein entsprechendes Magnetfeld erzeugt. Entsprechend des erzeugten Magnetfeldes wird der Anker axial versetzt, wodurch auch der Regelstift 20 eine axiale Versetzung erfährt.

Dabei ist der Regelstift 20 ein Teil des Regelelementes 2.

Der Elektromagnet würde sich oberhalb des Ventiles 1 anschließen, der Regelstift 20 ist in dem Kern 30 in geeigneter Weise gelagert beziehungsweise geführt.

Das in der Zeichnung gezeigte Ventil 1 ist insbesondere als Druckregelventil ausgebildet. Dabei umfasst das Ventil 1 eine Ventilbuchse 15, in welcher ein Ventilsitz 11 vorgesehen ist. In dem hier gezeigten Ausführungsbeispiel ist der Ventilsitz 11 realisiert durch einen Träger 18 mit zentrischer Durchdringungsöffnung 17 und sich darunter anschließenden Führungskäfig 16.

Mit dem Doppelpfeil 27 ist die axiale Verstellbarkeit des Regelelementes 2 angedeutet. Aufgrund der konischen Ausgestaltung des Regelstückes 21 wird klar, dass das Regelstück 21 die in dem Ventilsitz 11 vorgesehene Öffnung 17 je nach axialer Stellung (27) des Regelstückes mehr oder weniger freigibt, das heißt, den Spalt 10 vergrößert oder verkleinert.

In den in den Fig. 1, 2, und 3 gezeigten Varianten ist die axiale Lage des Regelstückes 21 so, dass der Spalt 10 fast vollständig verschlossen ist, also das Regelstück 21 fast im Ventilsitz 11 sitzt. Hieraus resultiert eine große Drosselung des Mediendruckes und somit eine entsprechende Druckminderung am Arbeitsanschluss 14. Das Medium, das zum Beispiel flüssig oder auch gasförmig ist, liegt am Druckanschluss 13 an.

Ein wesentlicher Bestandteil der Erfindung ist, dass das Regelelement 2 zweiteilig ausgebildet ist, also einen Regelstift 20 und ein davon getrennt hergestelltes, gegebenenfalls aus gleichen oder unterschiedlichen Materialien bestehendes Regelstück 21 aufweist. Für eine exakte aber auch mechanisch stabile Verbindung ist auf dem Regelstift 20 an geeigneter Stelle eine Umfangsnut 24 vorgesehen, in die, entsprechend dem Verbindungsverfahren von Regelstück 21 auf Regelstift 20, Material des Regelstückes 21 eindringt. Hierdurch ist es möglich, einen formschlüssigen Verbund zwischen dem Regelstück 21 und dem Regelstift 20 zu realisieren, der mechanisch stark belastbar ist.

Wie in den Zeichnungen dargestellt, ist das Regelstück 21 nicht am Ende des Regelstiftes 20 vorgesehen, sondern es besteht noch ein gewisser Überstand 26 unterhalb des Verbindungsbereiches 28, der natürlich die Umfangsnut 24 umfasst. Mit Hilfe dieses Überstandes 26 werden weitere Regelteile 12 des Ventiles 1 für verschiedene Zwecke angesteuert. Unterhalb des Trägers 18 schließt sich der Führungskäfig 16 an, der für eine Führung des Überstandes 26 des Regelstiftes dient. In dem hier gezeigten Ausführungsbeispiel ist zum Beispiel eine Kugel 19 in einem Käfig derart gehalten, dass es durch die Betätigung des Regelstiftes 20 beziehungsweise Überstandes 26 nur nach unten verschoben werden kann und dann einen entsprechenden Durchlass freigibt. Dabei ist die Kugel 19 lose, also getrennt von dem Regelstift 20.

Das Regelstück 21 besitzt eine Abdichtfläche 25. Diese Abdichtfläche 25 ist Teil der äußeren Begrenzungsfläche beziehungsweise Manteloberfläche des konusartig oder kegelartig realisierten Regelstückes 21. Ein gewisser Bereich der Begrenzungswand 23, die verhältnismäßig dünnwandig ist, liegt im komplett geschlossenen Zustand des Ventils als Abdichtfläche 25 auf dem Ventilsitz 11 auf und verschließt den Spalt 10 völlig. Dabei beträgt die Materialstärke der dünnwandigen Begrenzungswand 23 weniger als 1,5 mm, bevorzugt weniger als 1,0 mm, insbesondere weniger als 800 µm. Bezogen auf den Durchmesser des Regelstiftes ist die Wandstärke weniger als 50%, bevorzugt weniger als 35%, insbesondere weniger als 30%.

Das in Fig. 1 gezeigte Ausführungsbeispiel für das Regelstück 21 besteht aus einem bevorzugt in einem Umformprozess gewonnen Metallteil, das konusartig oder trichterartig ausgebildet ist und aufgrund der mittigen Öffnung 29 konzentrisch auf dem Regelstift 20 aufgesetzt ist. Charakteristisch für die trichterartige (200) Gestaltung des Regelstückes 21 ist, dass eine Kammer 22 vorgesehen ist, die, wenn der Regelstift 20 nicht eingeschoben wäre, in die Öffnung 29 mündet.

Dabei ist die Kammer 22 auf der dem Ventilsitz 11 abgewandten Seite zugänglich und in geeigneter Weise von dem zu steuernden Medium durchströmt.

Es ist gut zu erkennen, dass die Ausgestaltung des Regelstückes 21 nach Fig. 1 eine gleichbleibende Wandstärke aufweist. Diese resultiert, wenn ein entsprechendes Regelstück aus einem Metallteil in einem formgebenden Stanzbiege- oder Stanzsenkverfahren gewonnen wird. Diese Formgebung ist kostengünstig realisierbar. An der Engstelle 201 des konusartigen oder trichterartigen (200) Regelstückes 21, welche die Öffnung 29 begrenzt, wird das Material der Engstelle 201 in dem nachfolgenden Verbindungsprozess in die Umfangsnut 24 des Regelstiftes 20 eingepresst oder eingestemmt und so eine exakte und auch mechanisch gut belastbare Verbindung hergestellt. Alternativ füllt ein Klebstoff diese Nut aus.

Das Regelstück 21 weitet sich dann von der Engstelle 201 nach oben konus- oder trichterartig aus und schließt dann mit einem Ring 202 mit konstantem Radius ab. Die Oberkante des Ringes 202 bildet auch den Abschluss des Regelstückes 21 und begrenzt die Kammer 22.

Im Gegensatz zu dem Vorschlag nach Fig. 1 zeigt die Variante nach Fig. 2 ein variiertes Regelstück 21 sowie eine modifizierte Ausgestaltung des Kerns 30 mit einer (bezüglich der Achse des Regelstiftes 20) konzentrischen Erhöhung 31.

Die in Fig. 2 gezeigte Ausgestaltung des Regelstückes 21 ist ebenfalls wieder trichterartig beziehungsweise von der Außenseite gesehen konusartig. Die Funktionalität des hier gezeigten Regelstückes ist mit der von Fig. 1 vergleichbar und gleichwertig. In Fig. 2 allerdings ist das Regelstück 21 in einem Kunststoffumspritzungsvorgang entstanden, woraus etwas größere Wanddicken resultieren. Auch ist die Wanddicke selbst nicht überall gleich, dies kann durch entsprechende Ausgestaltungen des Spritzgusswerkzeuges realisiert werden. Für einen stabilen Verbund des aus Kunststoff, faserverstärkten Kunststoff (zum Beispiel kohlefaser- oder glasfaserversträrkten Kunststoff), hochtemperaturfesten Kunststoff oder hochfesten Kunststoff bestehenden Regelstückes 21 ist auf dem Regelstift 20 ebenfalls eine Ringnut 24 oder gegebenenfalls auch andere Oberflächenausnehmungen vorgesehen, wodurch ein Formschluss zwischen Regelstift 20 und Regelstück 21 erreicht wird.

In dem hier gezeigten Ausführungsbeispiel ist an dem Kern 30 eine, dem Ventilsitz 11 zugewandte Erhöhung 31 konzentrisch um die Lagerung des Stiftes 20 in dem Kern 30 angeordnet. Unabhängig von der axialen Stellung 27 des Stiftes 20 (und daher des Regelstückes 21), steht diese Erhöhung 31 in die Kammer 22 des Regelstückes 21 ein. Dabei bleibt aber ein kleiner Öffnungsspalt (ringförmig) zwischen der Erhöhung 31 und dem ringartigen Abschnitt 202, durch welchen auch das zu steuernde Medium strömen kann. Durch diese Konstruktion wird erreicht, dass eine höhere Stabilität gegen Druckschwingungen besteht.

Der Vorschlag nach Fig. 3 ersetzt das in Fig. 2 in Kunststoff ausgebildete Regelstück 21 mit dem Regelstück 21 nach Fig. 1, welches aus Metall gefertigt ist. Auch hier taucht die Erhöhung 31 in die Kammer 22 ein, wobei zwischen dem Rand der Erhöhung 31 und dem Ringabschnitt 202 des Regelstückes ein Spalt verbleibt.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Durch einen Elektromagneten betätigbares Ventil, insbesondere Druckregelventil, wobei der Anker des Elektromagneten auf ein Regelelement des Ventils wirkt und dieses derart, insbesondere axial versetzt, dass sich die Spaltweite eines in einem Ventilelement, wie zum Beispiel in einer Ventilplatte oder einer Ventilbuchse vorgesehenen Spaltes verändert beziehungsweise der Spalt sich öffnet oder schließt, **dadurch gekennzeichnet, dass** das Regelelement (2) aus einem Regelstift (20) und einem, hiervon getrennt hergestellten, auf dem Regelstift (20) befestigten Regelstück (21) gebildet ist, und das Regelstück (21) mit dem Spalt (10) zusammenwirkt.

2. Ventil nach Anspruch 1, **dadurch gekennzeichnet, dass** das Regelstück (21) scheiben-, teller-, kegel-, trichter- oder konusartig ausgebildet ist.

3. Ventil nach inem oder beiden der vorhergehenden Ansprüche, **dadurch gekennzeichnet, dass** das Regelstück (21) dünnwandig ist.

4. Ventil nach einem oder mehreren der vorhergehenden Ansprüche, **gekennzeichnet durch** einen kegel- oder konusartig, aus Vollmaterial bestehendem Regelstück (21).

5. Ventil nach einem oder mehreren der vorhergehenden Ansprüche, **dadurch gekennzeichnet, dass** das Regelstück (21) eine Kammer (22) aufweist beziehungsweise die dünnwandige Begrenzungswand (23) des Regelstückes (21) eine zugängliche Kammer (22) umschließt.

6. Ventil nach einem oder mehreren der vorhergehenden Ansprüche, **gekennzeichnet durch** eine Verschweißung, Verklebung oder Verstemmung des Regelstückes (21) auf dem Regelstift (20) beziehungsweise einem kraft- und/oder formschlüssigen Verbund von Regelstück (21) und Regelstift (20).

7. Ventil nach einem oder mehreren der vorhergehenden Ansprüche, **dadurch gekennzeichnet, dass** in dem Verbindungsbereich (28) von Regelstück (21) und Regelstift (20) auf dem Regelstift (20) eine Umfangsnut (24) oder Oberflächenausnehmung vorgesehen ist, die von dem Material des Regelstückes (21) ausgefüllt ist.

8. Ventil nach einem oder mehreren der vorhergehenden Ansprüche, **dadurch gekennzeichnet, dass** der Regelstift (20) und das Regelstück (21) aus gleichen oder unterschiedlichen Materialien bestehen.

9. Ventil nach einem oder mehreren der vorhergehenden Ansprüche, **dadurch gekennzeichnet, dass** das Regelstück (21) als Umformteil oder als Kunststoffspritzteil ausgebildet ist.

10. Ventil nach einem oder mehreren der vorhergehenden Ansprüche, **dadurch gekennzeichnet, dass** das Regelstück (21) aus Kunststoff, faserverstärktem Kunststoff, hochtemperaturfestem Kunststoff, hochfestem Kunststoff, Metall, insbesondere un- oder geringmagnetischem Metall, dünnwandiges Metallteil oder Keramik besteht.

11. Ventil nach einem oder mehreren der vorhergehenden Ansprüche, **dadurch gekennzeichnet, dass** der Regelstift (20) aus Kunststoff, faserverstärktem Kunststoff, hochtemperaturfestem Kunststoff, hochfestem Kunststoff oder Metall, insbesondere un- oder geringmagnetischem Metall besteht.

12. Ventil nach einem oder mehreren der vorhergehenden Ansprüche, **dadurch gekennzeichnet, dass** der Regelstift (20) in einem der Ventilbuchse zugewandte Kern (30) geführt beziehungsweise gelagert ist und der Kern (30) eine dem Regelstück (21) zugewandte Erhöhung (31) aufweist, welche zumindest teilweise in die Kammer (22) eintaucht.

13. Ventil nach einem oder mehreren der vorhergehenden Ansprüche, **dadurch gekennzeichnet, dass** das Regelstück (21) eine Abdichtfläche (25) zum Abdichten des den Spalt (10) begrenzenden Ventilsitzes (11) aufweist.

14. Ventil nach einem oder mehreren der vorhergehenden Ansprüche, **gekennzeichnet durch** einen Überstand (26) des Regelstiftes (20) bezüglich der Anordnung des Regelstückes (21), das zur Steuerung weiterer Regelteile (12) dient.
